(19) Europäisches Patentamt
European Patent Office
Office européen des brevets

(11) **EP 4 024 802 A1**

(12) **EUROPEAN PATENT APPLICATION**
published in accordance with Art. 153(4) EPC

(43) Date of publication:
**06.07.2022 Bulletin 2022/27**

(21) Application number: **20863698.5**

(22) Date of filing: **10.09.2020**

(51) International Patent Classification (IPC):
**H04L 27/26** (2006.01)

(52) Cooperative Patent Classification (CPC):
**H04L 27/26**

(86) International application number:
**PCT/CN2020/114611**

(87) International publication number:
**WO 2021/047613 (18.03.2021 Gazette 2021/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **12.09.2019 CN 201910869280**

(71) Applicant: **Huawei Technologies Co., Ltd.**
**Longgang District**
**Shenzhen,**
**Guangdong 518129 (CN)**

(72) Inventors:
• **LIANG, Dandan**
  **Shenzhen, Guangdong 518129 (CN)**

• **GAN, Ming**
  **Shenzhen, Guangdong 518129 (CN)**
• **LIN, Wei**
  **Shenzhen, Guangdong 518129 (CN)**
• **WU, Mingjiang**
  **Chengdu, Sichuan 611756 (CN)**
• **YANG, Yang**
  **Chengdu, Sichuan 611756 (CN)**
• **LEI, Xianfu**
  **Chengdu, Sichuan 611756 (CN)**

(74) Representative: **Epping - Hermann - Fischer**
**Patentanwaltsgesellschaft mbH**
**Schloßschmidstraße 5**
**80639 München (DE)**

(54) **SEQUENCE GENERATION METHOD AND APPARATUS**

(57) Embodiments of this application relate to the communications field, and in particular, to a sequence generation method and an apparatus. The sequence generation method in this application includes: multiplying a predefined EHT LTF sequence by a P matrix, to obtain a matrix-mapped EHT LTF sequence, where the P matrix is an n x n matrix, and n is greater than 8; and sending the matrix-mapped EHT LTF sequence. According to the sequence generation method and the apparatus that are provided in the embodiments of this application, the matrix-mapped EHT LTF sequence in a PPDU has a low PAPR value.

FIG. 2

## Description

This application claims priority to Chinese Patent Application No. 201910869280.2, filed with the China National Intellectual Property Administration on September 12, 2019 and entitled "SEQUENCE GENERATION METHOD AND APPARATUS ", which is incorporated herein by reference in its entirety.

## TECHNICAL FIELD

Embodiments of this application relate to the communications field, and in particular, to a sequence generation method and an apparatus.

## BACKGROUND

Communications devices are more widely used over the past few years. For example, a communications device usually provides network access to, for example, a local area network or the internet. Other communications devices may perform wireless communication with the communications device that provides network access. Some communications devices comply with some industry standards such as Institute of Electrical and Electronics Engineers standards.

As a quantity of communications devices increase, people seek to improve capacities, reliability, and efficiency of the communications devices. Systems and methods for improving capacities, reliability, or efficiency of the communications devices may be helpful.

## SUMMARY

Embodiments of this application provide a sequence generation method and an apparatus, so that a matrix-mapped EHT LTF sequence in a PPDU has a low PAPR value.

According to a first aspect, an embodiment of this application provides a sequence generation method, including:

obtaining a matrix-mapped EHT LTF sequence by multiplying a predefined EHT LTF sequence by a P matrix, where the P matrix is an n x n matrix, and n is greater than 8; and
sending the matrix-mapped EHT LTF sequence.

Optionally, for the P matrix in the first aspect, refer to various P matrices in specific embodiments.

According to a second aspect, an embodiment of this application provides a sequence processing method, including:

receiving a matrix-mapped EHT LTF sequence, where the matrix-mapped EHT LTF sequence is obtained by multiplying a predefined EHT LTF sequence by a P matrix, the P matrix is an n x n matrix, and n is greater than 8; and
performing channel estimation based on the matrix-mapped EHT LTF sequence.

Optionally, for the P matrix in the second aspect, refer to various P matrices in specific embodiments.

According to a third aspect, an embodiment of this application provides a sequence generation method, including:

generating a PPDU, where the PPDU includes a matrix-mapped EHT LTF sequence, the matrix-mapped EHT LTF sequence is obtained by multiplying a predefined EHT LTF sequence by a P matrix, the P matrix is an n x n matrix, and n is greater than 8; and
sending the PPDU.

Optionally, for the P matrix in the third aspect, refer to various P matrices in specific embodiments.

According to a fourth aspect, an embodiment of this application provides a sequence processing method, including:

receiving a PPDU, where the PPDU includes a matrix-mapped EHT LTF sequence, the matrix-mapped EHT LTF sequence is obtained by multiplying a predefined EHT LTF sequence by a P matrix, the P matrix is an n x n matrix, and n is greater than 8; and
performing channel estimation based on the matrix-mapped EHT LTF sequence.

Optionally, for the P matrix in the fourth aspect, refer to various P matrices in specific embodiments.

According to a fifth aspect, an embodiment of this application provides a sequence generation apparatus, where the sequence generation apparatus includes modules configured to perform the method according to the first aspect or any possible implementation of the first aspect.

According to a sixth aspect, an embodiment of this application provides a sequence processing apparatus, where the sequence processing apparatus includes modules configured to perform the method according to the second aspect or any possible implementation of the second aspect.

According to a seventh aspect, an embodiment of this application provides a sequence generation apparatus, where the sequence generation apparatus includes modules configured to perform the method according to the third aspect or any possible implementation of the third aspect.

According to an eighth aspect, an embodiment of this application provides a sequence processing apparatus, where the sequence processing apparatus includes modules configured to perform the method according to the fourth aspect or any possible implementation of the fourth aspect.

According to a ninth aspect, an embodiment of this application provides a computer-readable storage medium, configured to store a computer program. The computer program includes instructions used to perform the first aspect or any possible implementation of the first aspect, instructions used to perform the second aspect or any possible implementation of the second aspect, instructions used to perform the third aspect or any possible implementation of the third aspect, or instructions used to perform the fourth aspect or any possible implementation of the fourth aspect.

According to a tenth aspect, an embodiment of this application provides a computer program. The computer program includes instructions used to perform the first aspect or any possible implementation of the first aspect, instructions used to perform the second aspect or any possible implementation of the second aspect, instructions used to perform the third aspect or any possible implementation of the third aspect, or instructions used to perform the fourth aspect or any possible implementation of the fourth aspect.

According to an eleventh aspect, an embodiment of this application provides a communications system, where the communications system includes the sequence generation apparatus provided in the fifth aspect and the sequence processing apparatus provided in the sixth aspect.

According to a twelfth aspect, an embodiment of this application provides a communications system, where the communications system includes the sequence generation apparatus provided in the seventh aspect and the sequence processing apparatus provided in the eighth aspect.

**BRIEF DESCRIPTION OF DRAWINGS**

FIG. 1 shows a communications system to which an embodiment of this application is applied;
FIG. 2 is a diagram of a system;
FIG. 3 is a flowchart of a sequence generation method according to an embodiment of this application;
FIG. 4 is a diagram of a structure of a sequence generation apparatus; and
FIG. 5 is a diagram of a structure of a sequence receiving apparatus.

**DESCRIPTION OF EMBODIMENTS**

The following describes the technical solutions in the embodiments of this application with reference to the accompanying drawings in the embodiments of this application.

It should be understood that, the technical solutions of the embodiments of this application may be applied to various communications systems, such as: a Wi-Fi wireless communications system, a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communications system, other future evolved systems, or various other wireless communications system using a radio access technology.

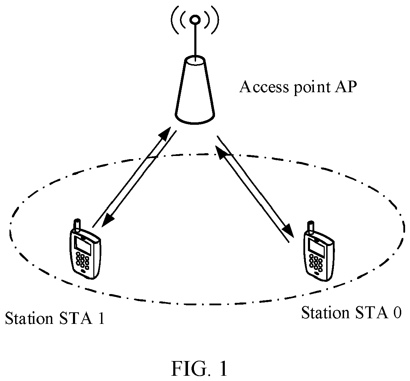

FIG. 1 shows a communications system to which an embodiment of this application is applied. The communications system includes a network device and at least one terminal device located within coverage of the network device. The network device may provide communication coverage for a specific geographic area, and communicate with the terminal device located in the coverage area. The network device may be a base transceiver station (base transceiver station, BTS) in a GSM system or a code division multiple access (code division multiple access, CDMA) system, may

3

be a nodeB (nodeB, NB) in a WCDMA system, may be an evolved NodeB (evolved NodeB, eNB, or eNodeB) in an LTE system, may be a radio controller in a cloud radio access network (cloud radio access network, CRAN), or may be a relay station, an access point AP, a vehicle-mounted device, a wearable device, a network-side device in a future network, or the like. The terminal device may be mobile or fixed, and the terminal device may be a station STA, an access terminal, user equipment (user equipment, UE), a subscriber unit, a subscriber station, a mobile station, a mobile station, a remote station, a remote terminal, a mobile device, a user terminal, a wireless communications device, a user agent, a user apparatus, or the like.

Specifically, the embodiments of this application relate to a sequence generation method and a sequence generation apparatus. A sequence generated in the embodiments of this application has a low PAPR value.

Technical terms used in the embodiments of this application are first described as follows:

PPDU: PHY Protocol Data Unit, physical layer protocol data unit; and
EHT LTF: Extremely High Throughput Long Training Field, extremely high throughput long training field.

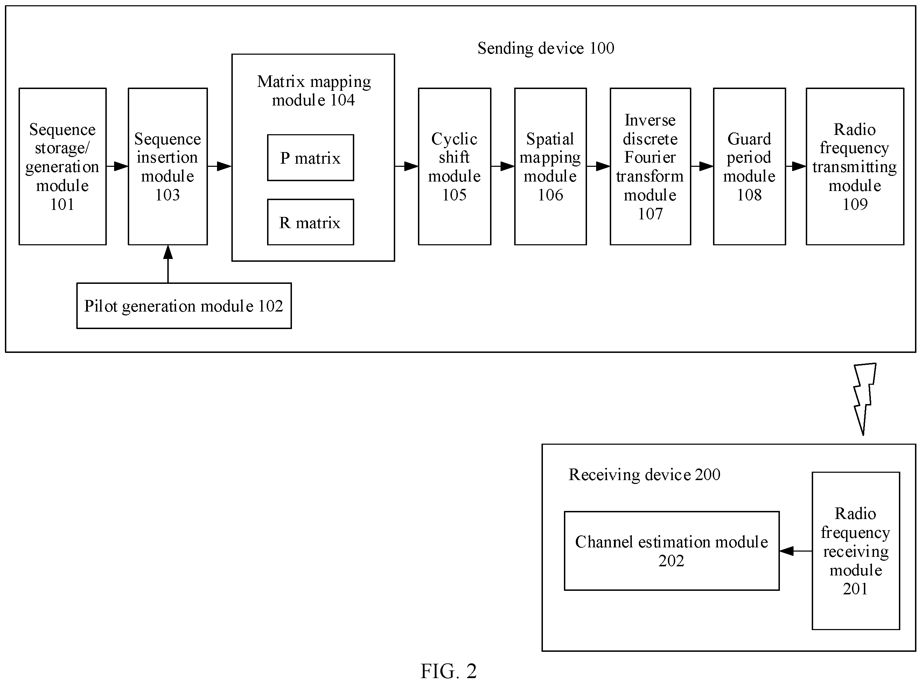

The following describes the sequence generation apparatus in the embodiments of this application by using FIG. 2 as an example.

FIG. 2 is a diagram of a system. The system includes a sending device 100 and a receiving device 200. The sending device 100 is configured to generate and send a sequence with a low PAPR value, and the receiving device 200 is configured to receive the sequence and perform channel estimation based on the sequence.

As shown in FIG. 2, the sending device 100 includes the following modules.

A sequence storage/generation module 101 is configured to store or generate a predefined data sequence (in the embodiments of this application, a sequence of data locations is collectively referred to as a data sequence), where the predefined data sequence includes a plurality of different sequences in different modes and different bandwidths, the different bandwidths may include a 20 M bandwidth, a 40 M bandwidth, an 80 M bandwidth, a 160 M bandwidth, a 320 M bandwidth, a 160 M + 160 M bandwidth, and the like, and the different modes may include a 1× mode, a 2x mode, a 4x mode, and the like. For example, the plurality of different sequences in the different modes and the different bandwidths include: a sequence in the 20 M bandwidth and the 1× mode, a sequence in the 20 M bandwidth and the 2x mode, a sequence in the 20 M bandwidth and the 4x mode, a sequence in the 40 M bandwidth and the 1× mode, a sequence in the 40 M bandwidth and the 2x mode, a sequence in the 40 M bandwidth and the 4x mode,..., a sequence in the 320 M bandwidth and the 1× mode, a sequence in the 320 M bandwidth and the 2x mode, and a sequence in the 320 M bandwidth and the 4x mode. Optionally, the data sequence is an EHT LTF sequence, that is, the sequence storage module 101 stores a predefined EHT LTF sequence.

A pilot generation module 102 is configured to generate a pilot sequence, where the pilot sequence is used to track a phase or a frequency offset of a transmit signal.

A pilot insertion module 103 is configured to insert the pilot sequence into the data sequence. In other words, the pilot insertion module 103 is configured to combine the pilot sequence and the data sequence.

A matrix mapping module 104 is configured to apply a matrix to the pilot sequence and the data sequence that are combined, to generate a matrix-mapped sequence. The matrix mapping module 104 includes a first matrix and a second matrix, where the first matrix provides a mapping for the data sequence and the second matrix provides a mapping for the pilot sequence. In other words, the first matrix is applied to the data sequence and the second matrix is applied to the pilot sequence. For convenience, the first matrix may be referred to as a P matrix, where the P matrix is an n x n matrix; and the second matrix may be referred to as an R matrix, where the R matrix includes x replicas of a first row of the P matrix, and x is a quantity of spatial streams.

In an example, applying the P matrix to the EHT LTF sequence is specifically multiplying the EHT LTF sequence by an element in the P matrix, for example, multiplying the EHT LTF sequence by each row of the P matrix, to obtain a plurality of matrix-mapped sequences, where the plurality of matrix-mapped sequences is spatially mapped to a plurality of different spatial streams for sending.

The n x n P matrix (n is greater than 8) provided in this embodiment of this application is intended to ensure that when the quantity of spatial streams increases to more than 8, a matrix-mapped sequence sent in each spatial stream needs to remain orthogonal and has a low PAPR value.

In this embodiment of this application, when the quantity of spatial streams is n and n is an even number, the n x n P matrix is applied. When the quantity of spatial streams is n and n is an odd number, an (n+1) x (n+1) P matrix is applied.

The following describes P matrices for different quantities of spatial streams provided in this embodiment of this application. The P matrix has a plurality of variations for each spatial stream.

(1) P matrix for 9 or 10 spatial streams

When the quantity of spatial streams is 9 or 10, the P matrix provided in this embodiment of this application is:

$$P_{10 \times 10} = \begin{bmatrix} P_{5 \times 5} & P_{5 \times 5} \\ P_{5 \times 5} & -P_{5 \times 5} \end{bmatrix} \qquad (11)$$

where

$$P_{5 \times 5} = \begin{bmatrix} w^{0*0} & -w^{0*1} & w^{0*2} & w^{0*3} & w^{0*4} \\ w^{1*0} & -w^{1*1} & w^{1*2} & w^{1*3} & w^{1*4} \\ w^{2*0} & -w^{2*1} & w^{2*2} & w^{2*3} & w^{2*4} \\ w^{3*0} & -w^{3*1} & w^{3*2} & w^{3*3} & w^{3*4} \\ w^{4*0} & -w^{4*1} & w^{4*2} & w^{4*3} & w^{4*4} \end{bmatrix}, \text{ and } w = \exp(-j2\pi/5) \qquad (12)$$

$P_{5 \times 5}$ in the foregoing formula (12) is obtained by multiplying the second column of $P_{original}$ by -1, where $P_{original}$ is expressed as follows:

$$P_{original} = \begin{bmatrix} w^{0*0} & w^{0*1} & w^{0*2} & w^{0*3} & w^{0*4} \\ w^{1*0} & w^{1*1} & w^{1*2} & w^{1*3} & w^{1*4} \\ w^{2*0} & w^{2*1} & w^{2*2} & w^{2*3} & w^{2*4} \\ w^{3*0} & w^{3*1} & w^{3*2} & w^{3*3} & w^{3*4} \\ w^{4*0} & w^{4*1} & w^{4*2} & w^{4*3} & w^{4*4} \end{bmatrix}, \text{ and } w = \exp(-j2\pi/5) \qquad (13)$$

For $P_{5 \times 5}$ in the foregoing formula (11), refer to the foregoing formula (12). $P_{5 \times 5}$ in the formula (12) is obtained by multiplying the second column of $P_{original}$ in the formula (13) by -1. The foregoing is only an example of a $P_{10 \times 10}$ matrix when the quantity of spatial streams is 9 or 10 provided in this embodiment of this application.

Optionally, this embodiment of this application further provides another $P_{10 \times 10}$ matrix when the quantity of spatial streams is 9 or 10:

$$P_{10 \times 10} = \begin{bmatrix} P_{5 \times 5} & P_{5 \times 5} \\ P_{5 \times 5} & -P_{5 \times 5} \end{bmatrix} \qquad (11)$$

$P_{5 \times 5}$ may be obtained by multiplying any one column of $P_{original}$ by -1, or $P_{5 \times 5}$ may be obtained by multiplying any plurality of columns of $P_{original}$ by -1, where the any plurality of columns herein do not include all columns. For example, the second column and the third column of $P_{original}$ are multiplied by -1, to obtain $P_{5 \times 5}$, but not all columns from the first column to the fifth column of $P_{original}$ are multiplied by -1.

A matrix-mapped sequence obtained through mapping by using the foregoing $P_{10 \times 10}$ has a low PAPR value. In the 80 M bandwidth and the 4x mode, a PAPR value of the matrix-mapped sequence obtained through mapping by using the foregoing $P_{10 \times 10}$ is 6.2771. When Fourier matrix mapping is directly applied, or Fourier matrix mapping in which one or more columns are multiplied by -1 is applied, a PAPR value of the obtained matrix-mapped sequence is 6.2851. It is clear that the PAPR value of the obtained matrix-mapped sequence is lower by using $P_{10 \times 10}$ provided in this embodiment of this application to map the EHT LTF sequence. Similarly, in the 320 M bandwidth and the 4x mode, a PAPR value of the matrix-mapped sequence obtained through mapping by using the foregoing $P_{10 \times 10}$ is 9.2297. When Fourier matrix mapping is directly applied, or Fourier matrix mapping in which one or more columns are multiplied by -1 is applied, a PAPR value of the obtained matrix-mapped sequence is 9.2653. It is clear that the PAPR value of the obtained matrix-mapped sequence is lower by using $P_{10 \times 10}$ provided in this embodiment of this application to map the EHT LTF sequence.

(2) P matrix for 11 or 12 spatial streams

When the quantity of spatial streams is 11 or 12, the P matrix provided in this embodiment of this application is:

$$P_{12\times12} = \begin{bmatrix} P_{6\times6} & P_{6\times6} \\ P_{6\times6} & -P_{6\times6} \end{bmatrix} \qquad (21)$$

where

$$P_{6\times6} = \begin{bmatrix} P_{3\times3} & P_{3\times3} \\ P_{3\times3} & -P_{3\times3} \end{bmatrix} \qquad (22)$$

$$P_{3\times3} = \begin{bmatrix} w^{0*0} & -w^{0*1} & w^{0*2} \\ w^{1*0} & -w^{1*1} & w^{1*2} \\ w^{2*0} & -w^{2*1} & w^{2*2} \end{bmatrix}, \text{ and } w = \exp(-j2\pi/3) \qquad (23)$$

The foregoing $P_{3\times3}$ is obtained by multiplying the second column of the following $P_{original}$ by -1, where $P_{original}$ is expressed as follows:

$$P_{original} = \begin{bmatrix} w^{0*0} & w^{0*1} & w^{0*2} \\ w^{1*0} & w^{1*1} & w^{1*2} \\ w^{2*0} & w^{2*1} & w^{2*2} \end{bmatrix}, \text{ and } w = \exp(-j2\pi/3) \qquad (24)$$

$P_{3\times3}$ in the foregoing formula (23) is obtained by multiplying the second column of $P_{original}$ in the formula (24) by -1. $P_{3\times3}$ in (23) is substituted into the formula (22), to obtain $P_{6\times6}$. Then, $P_{6\times6}$ in (23) is substituted into the formula (21) to obtain $P_{2\times12}$.

Optionally, this embodiment of this application further provides another $P_{12\times12}$ matrix when the quantity of spatial streams is 11 or 12, for example, in the foregoing formula (21) to formula (24), $P_{3\times3}$ in (23) may be obtained by multiplying any one column of $P_{original}$ in the formula (24) by -1. Multiplying the second column by -1 is not limited thereto. Alternatively, $P_{3\times3}$ in (23) may be obtained by multiplying any plurality of columns of $P_{original}$ in the formula (24) by -1, where the any plurality of columns herein do not include all columns. For example, both the second column and the third column of $P_{original}$ in (24) are multiplied by -1 to obtain $P_{3\times3}$ in (23), but not all columns from the first to the third columns of $P_{original}$ in (24) are multiplied by -1.

A matrix-mapped sequence obtained through mapping by using the foregoing $P_{12\times12}$ has a low PAPR value. In the 80 M bandwidth and the 4x mode, a PAPR value of the matrix-mapped sequence obtained through mapping by using the foregoing $P_{12\times12}$ is 6.2369. When Fourier matrix mapping is directly applied, or Fourier matrix mapping in which one or more columns are multiplied by -1 is applied, a PAPR value of the obtained matrix-mapped sequence is 6.3003. It is clear that the PAPR value of the obtained matrix-mapped sequence is lower by using $P_{10\times10}$ provided in this embodiment of this application to map the EHT LTF sequence. Similarly, in the 320 M bandwidth and the 4x mode, a PAPR value of the matrix-mapped sequence obtained through mapping by using the foregoing $P_{12\times12}$ is 9.2236. When Fourier matrix mapping is directly applied, or Fourier matrix mapping in which one or more columns are multiplied by -1 is applied, a PAPR value of the obtained matrix-mapped sequence is 9.2636. It is clear that the PAPR value of the obtained matrix-mapped sequence is lower by using $P_{12\times12}$ provided in this embodiment of this application to map the EHT LTF sequence.

When the quantity of spatial streams is 11 or 12, this embodiment of this application further provides the following P matrix:

$$P_{12\times12} = \begin{bmatrix} P_{6\times6} & P_{6\times6} \\ P_{6\times6} & -P_{6\times6} \end{bmatrix} \qquad (31)$$

where

$$P_{6\times6} = \begin{bmatrix} w^{0*0} & -w^{0*1} & w^{0*2} & w^{0*3} & w^{0*4} & -w^{0*5} \\ w^{1*0} & -w^{1*1} & w^{1*2} & w^{1*3} & w^{1*4} & -w^{1*5} \\ w^{2*0} & -w^{2*1} & w^{2*2} & w^{2*3} & w^{2*4} & -w^{2*5} \\ w^{3*0} & -w^{3*1} & w^{3*2} & w^{3*3} & w^{3*4} & -w^{3*5} \\ w^{4*0} & -w^{4*1} & w^{4*2} & w^{4*3} & w^{4*4} & -w^{4*5} \\ w^{5*0} & -w^{5*1} & w^{5*2} & w^{5*3} & w^{5*4} & -w^{5*5} \end{bmatrix}, \text{ and } w = \exp(-j2\pi/6) \qquad (32)$$

$P_{6\times6}$ in the foregoing formula (32) is obtained by multiplying the second column and the sixth column of $P_{original}$ in the following formula (33) by -1, where $P_{original}$ is expressed as follows:

$$P_{original} = \begin{bmatrix} w^{0*0} & w^{0*1} & w^{0*2} & w^{0*3} & w^{0*4} & w^{0*5} \\ w^{1*0} & w^{1*1} & w^{1*2} & w^{1*3} & w^{1*4} & w^{1*5} \\ w^{2*0} & w^{2*1} & w^{2*2} & w^{2*3} & w^{2*4} & w^{2*5} \\ w^{3*0} & w^{3*1} & w^{3*2} & w^{3*3} & w^{3*4} & w^{3*5} \\ w^{4*0} & w^{4*1} & w^{4*2} & w^{4*3} & w^{4*4} & w^{4*5} \\ w^{5*0} & w^{5*1} & w^{5*2} & w^{5*3} & w^{5*4} & w^{5*5} \end{bmatrix}, \text{ and } w = \exp(-j2\pi/6) \qquad (33)$$

Optionally, this embodiment of this application further provides another $P_{12\times12}$ matrix when the quantity of spatial streams is 11 or 12, for example, in the foregoing formula (31) to formula (33), $P_{6\times6}$ in (32) may be obtained by multiplying any one column of $P_{original}$ in the formula (33) by -1. Alternatively, $P_{6\times6}$ in (32) may be obtained by multiplying any plurality of columns $P_{original}$ in the formula (33) by -1, where the any plurality of columns herein do not include all columns. In addition to that the second column and the sixth column in the formula (32) are multiplied by -1, any other plurality of columns may be multiplied by -1. For example, the second column, the third column, and the fourth column of $P_{original}$ in the formula (33) are multiplied by -1.

A matrix-mapped sequence obtained through mapping by using the foregoing $P_{12\times12}$ has a low PAPR value. In the 80 M bandwidth and the 4x mode, a PAPR value of the matrix-mapped sequence obtained through mapping by using the foregoing $P_{12\times12}$ is 6.2851. When Fourier matrix mapping is directly applied, or Fourier matrix mapping in which one or more columns are multiplied by -1 is applied, a PAPR value of the obtained matrix-mapped sequence is 6.3003. It is clear that the PAPR value of the obtained matrix-mapped sequence is lower by using $P_{12\times12}$ provided in this embodiment of this application to map the EHT LTF sequence. Similarly, in the 320 M bandwidth and the 4x mode, a PAPR value of the matrix-mapped sequence obtained through mapping by using the foregoing $P_{12\times12}$ is 9.2499. When Fourier matrix mapping is directly applied, or Fourier matrix mapping in which one or more columns are multiplied by -1 is applied, a PAPR value of the obtained matrix-mapped sequence is 9.2636. It is clear that the PAPR value of the obtained matrix-mapped sequence is lower by using $P_{12\times12}$ provided in this embodiment of this application to map the EHT LTF sequence.

(3) P matrix for 13 or 14 spatial streams

When the quantity of spatial streams is 13 or 14, this embodiment of this application provides the following P matrix:

$$P_{14\times14} = \begin{bmatrix} P_{7\times7} & P_{7\times7} \\ P_{7\times7} & -P_{7\times7} \end{bmatrix} \qquad (41)$$

where

$$P_{7\times7} = \begin{bmatrix} w^{0*0} & -w^{0*1} & w^{0*2} & w^{0*3} & w^{0*4} & -w^{0*5} & w^{0*6} \\ w^{1*0} & -w^{1*1} & w^{1*2} & w^{1*3} & w^{1*4} & -w^{1*5} & w^{1*6} \\ w^{2*0} & -w^{2*1} & w^{2*2} & w^{2*3} & w^{2*4} & -w^{2*5} & w^{2*6} \\ w^{3*0} & -w^{3*1} & w^{3*2} & w^{3*3} & w^{3*4} & -w^{3*5} & w^{3*6} \\ w^{4*0} & -w^{4*1} & w^{4*2} & w^{4*3} & w^{4*4} & -w^{4*5} & w^{4*6} \\ w^{5*0} & -w^{5*1} & w^{5*2} & w^{5*3} & w^{5*4} & -w^{5*5} & w^{5*6} \\ w^{6*0} & -w^{6*1} & w^{6*2} & w^{6*3} & w^{6*4} & -w^{6*5} & w^{6*6} \end{bmatrix}, \text{ and } w = \exp(-j2\pi/7) \quad (42)$$

$P_{7\times7}$ in the foregoing formula (42) is obtained by multiplying the second column and the sixth column of $P_{original}$ in the following formula (43) by -1, where $P_{original}$ is expressed as follows:

$$P_{original} = \begin{bmatrix} w^{0*0} & w^{0*1} & w^{0*2} & w^{0*3} & w^{0*4} & w^{0*5} & w^{0*6} \\ w^{1*0} & w^{1*1} & w^{1*2} & w^{1*3} & w^{1*4} & w^{1*5} & w^{1*6} \\ w^{2*0} & w^{2*1} & w^{2*2} & w^{2*3} & w^{2*4} & w^{2*5} & w^{2*6} \\ w^{3*0} & w^{3*1} & w^{3*2} & w^{3*3} & w^{3*4} & w^{3*5} & w^{3*6} \\ w^{4*0} & w^{4*1} & w^{4*2} & w^{4*3} & w^{4*4} & w^{4*5} & w^{4*6} \\ w^{5*0} & w^{5*1} & w^{5*2} & w^{5*3} & w^{5*4} & w^{5*5} & w^{5*6} \\ w^{6*0} & w^{6*1} & w^{6*2} & w^{6*3} & w^{6*4} & w^{6*5} & w^{6*6} \end{bmatrix}, \text{ and } w = \exp(-j2\pi/7) \quad (43)$$

Optionally, this embodiment of this application further provides another $P_{14\times14}$ matrix when the quantity of spatial streams is 13 or 14, for example, in the foregoing formula (41) to formula (43), $P_{7\times7}$ in the formula (42) may be obtained by multiplying any one column of $P_{original}$ in the formula (43) by -1. Alternatively, $P_{7\times7}$ in the formula (42) may be obtained by multiplying any plurality of columns of $P_{original}$ in the formula (43) by -1, where the any plurality of columns herein do not include all columns. In addition to that the second column and the sixth column in the formula (42) are multiplied by -1, any other plurality of columns may be multiplied by - 1. For example, the second column, the third column, and the fourth column of $P_{original}$ in the formula (43) are multiplied by -1.

A matrix-mapped sequence obtained through mapping by using the foregoing $P_{14\times14}$ has a low PAPR value. In the 80 M bandwidth and the 4x mode, a PAPR value of the matrix-mapped sequence obtained through mapping by using the foregoing $P_{14\times14}$ is 6.3115. When Fourier matrix mapping is directly applied, or Fourier matrix mapping in which one or more columns are multiplied by -1 is applied, a PAPR value of the obtained matrix-mapped sequence is 6.3115. It is clear that the PAPR value of the obtained matrix-mapped sequence is lower by using $P_{14\times14}$ provided in this embodiment of this application to map the EHT LTF sequence. Similarly, in the 320 M bandwidth and the 4x mode, a PAPR value of the matrix-mapped sequence obtained through mapping by using the foregoing $P_{14\times14}$ is 9.2594. When Fourier matrix mapping is directly applied, or Fourier matrix mapping in which one or more columns are multiplied by -1 is applied, a PAPR value of the obtained matrix-mapped sequence is 9.2611. It is clear that the PAPR value of the obtained matrix-mapped sequence is lower by using $P_{14\times14}$ provided in this embodiment of this application to map the EHT LTF sequence.

(4) P matrix for 17 or 18 spatial streams

When the quantity of spatial streams is 17 or 18, this embodiment of this application provides the following P matrix:

$$P_{18\times18} = \begin{bmatrix} P_{9\times9} & P_{9\times9} \\ P_{9\times9} & -P_{9\times9} \end{bmatrix} \quad (51)$$

where

$$P_{9\times 9} = \begin{bmatrix} w^{0*0} & -w^{0*1} & w^{0*2} & w^{0*3} & w^{0*4} & -w^{0*5} & w^{0*6} & w^{0*7} & w^{0*8} \\ w^{1*0} & -w^{1*1} & w^{1*2} & w^{1*3} & w^{1*4} & -w^{1*5} & w^{1*6} & w^{1*7} & w^{1*8} \\ w^{2*0} & -w^{2*1} & w^{2*2} & w^{2*3} & w^{2*4} & -w^{2*5} & w^{2*6} & w^{2*7} & w^{2*8} \\ w^{3*0} & -w^{3*1} & w^{3*2} & w^{3*3} & w^{3*4} & -w^{3*5} & w^{3*6} & w^{3*7} & w^{3*8} \\ w^{4*0} & -w^{4*1} & w^{4*2} & w^{4*3} & w^{4*4} & -w^{4*5} & w^{4*6} & w^{4*7} & w^{4*8} \\ w^{5*0} & -w^{5*1} & w^{5*2} & w^{5*3} & w^{5*4} & -w^{5*5} & w^{5*6} & w^{5*7} & w^{5*8} \\ w^{6*0} & -w^{6*1} & w^{6*2} & w^{6*3} & w^{6*4} & -w^{6*5} & w^{6*6} & w^{6*7} & w^{6*8} \\ w^{7*0} & -w^{7*1} & w^{7*2} & w^{7*3} & w^{7*4} & -w^{7*5} & w^{7*6} & w^{7*7} & w^{7*8} \\ w^{8*0} & -w^{8*1} & w^{8*2} & w^{8*3} & w^{8*4} & -w^{8*5} & w^{8*6} & w^{8*7} & w^{8*8} \end{bmatrix},$$

$$\text{and} \quad w = \exp(-j2\pi/9) \qquad (52)$$

$P_{9\times 9}$ in the foregoing formula (52) is obtained by multiplying the second column and the sixth column of $P_{original}$ in the following formula (53) by -1, where $P_{original}$ is expressed as follows:

$$P_{original} = \begin{bmatrix} w^{0*0} & w^{0*1} & w^{0*2} & w^{0*3} & w^{0*4} & w^{0*5} & w^{0*6} & w^{0*7} & w^{0*8} \\ w^{1*0} & w^{1*1} & w^{1*2} & w^{1*3} & w^{1*4} & w^{1*5} & w^{1*6} & w^{1*7} & w^{1*8} \\ w^{2*0} & w^{2*1} & w^{2*2} & w^{2*3} & w^{2*4} & w^{2*5} & w^{2*6} & w^{2*7} & w^{2*8} \\ w^{3*0} & w^{3*1} & w^{3*2} & w^{3*3} & w^{3*4} & w^{3*5} & w^{3*6} & w^{3*7} & w^{3*8} \\ w^{4*0} & w^{4*1} & w^{4*2} & w^{4*3} & w^{4*4} & w^{4*5} & w^{4*6} & w^{4*7} & w^{4*8} \\ w^{5*0} & w^{5*1} & w^{5*2} & w^{5*3} & w^{5*4} & w^{5*5} & w^{5*6} & w^{5*7} & w^{5*8} \\ w^{6*0} & w^{6*1} & w^{6*2} & w^{6*3} & w^{6*4} & w^{6*5} & w^{6*6} & w^{6*7} & w^{6*8} \\ w^{7*0} & w^{7*1} & w^{7*2} & w^{7*3} & w^{7*4} & w^{7*5} & w^{7*6} & w^{7*7} & w^{7*8} \\ w^{8*0} & w^{8*1} & w^{8*2} & w^{8*3} & w^{8*4} & w^{8*5} & w^{8*6} & w^{8*7} & w^{8*8} \end{bmatrix},$$

$$\text{and} \quad w = \exp(-j2\pi/9) \qquad (53)$$

Optionally, this embodiment of this application further provides another $P_{14\times 14}$ matrix when the quantity of spatial streams is 17 or 18, for example, in the foregoing formula (51) to formula (53), $P_{9\times 9}$ in the formula (52) may be obtained by multiplying any one column of $P_{original}$ in the formula (53) by -1. Alternatively, $P_{9\times 9}$ in the formula (52) may be obtained by multiplying any plurality of columns of $P_{original}$ in the formula (53) by -1, where the any plurality of columns herein do not include all columns. In addition to that the second column and the sixth column in the formula (52) are multiplied by -1, any other plurality of columns may be multiplied by - 1. For example, the second column, the third column, and the fourth column of $P_{original}$ in the formula (53) are multiplied by -1.

(5) P matrix for 21 or 22 spatial streams

When the quantity of spatial streams is 21 or 22, this embodiment of this application provides the following P matrix:

$$P_{22\times 22} = \begin{bmatrix} P_{11\times 11} & P_{11\times 11} \\ P_{11\times 11} & -P_{11\times 11} \end{bmatrix} \qquad (61)$$

where

$$P_{11\times11} = \begin{bmatrix} w^{0*0} & -w^{0*1} & w^{0*2} & w^{0*3} & w^{0*4} & -w^{0*5} & w^{0*6} & w^{0*7} & w^{0*8} & -w^{0*9} & w^{0*10} \\ w^{1*0} & -w^{1*1} & w^{1*2} & w^{1*3} & w^{1*4} & -w^{1*5} & w^{1*6} & w^{1*7} & w^{1*8} & -w^{1*9} & w^{1*10} \\ w^{2*0} & -w^{2*1} & w^{2*2} & w^{2*3} & w^{2*4} & -w^{2*5} & w^{2*6} & w^{2*7} & w^{2*8} & -w^{2*9} & w^{2*10} \\ w^{3*0} & -w^{3*1} & w^{3*2} & w^{3*3} & w^{3*4} & -w^{3*5} & w^{3*6} & w^{3*7} & w^{3*8} & -w^{3*9} & w^{3*10} \\ w^{4*0} & -w^{4*1} & w^{4*2} & w^{4*3} & w^{4*4} & -w^{4*5} & w^{4*6} & w^{4*7} & w^{4*8} & -w^{4*9} & w^{4*10} \\ w^{5*0} & -w^{5*1} & w^{5*2} & w^{5*3} & w^{5*4} & -w^{5*5} & w^{5*6} & w^{5*7} & w^{5*8} & -w^{5*9} & w^{5*10} \\ w^{6*0} & -w^{6*1} & w^{6*2} & w^{6*3} & w^{6*4} & -w^{6*5} & w^{6*6} & w^{6*7} & w^{6*8} & -w^{6*9} & w^{6*10} \\ w^{7*0} & -w^{7*1} & w^{7*2} & w^{7*3} & w^{7*4} & -w^{7*5} & w^{7*6} & w^{7*7} & w^{7*8} & -w^{7*9} & w^{7*10} \\ w^{8*0} & -w^{8*1} & w^{8*2} & w^{8*3} & w^{8*4} & -w^{8*5} & w^{8*6} & w^{8*7} & w^{8*8} & -w^{8*9} & w^{8*10} \\ w^{9*0} & -w^{9*1} & w^{9*2} & w^{9*3} & w^{9*4} & -w^{9*5} & w^{9*6} & w^{9*7} & w^{9*8} & -w^{9*9} & w^{9*10} \\ w^{10*0} & -w^{10*1} & w^{10*2} & w^{10*3} & w^{10*4} & -w^{10*5} & w^{10*6} & w^{10*7} & w^{10*8} & -w^{10*9} & w^{10*10} \end{bmatrix},$$

and $w = \exp(-j2\pi/11)$   (62)

$P_{11\times11}$ in the foregoing formula (62) is obtained by multiplying the second column, the sixth column, and the tenth column of $P_{original}$ in the following formula (63) by -1, where $P_{original}$ is expressed as follows:

$$P_{original} = \begin{bmatrix} w^{0*0} & w^{0*1} & w^{0*2} & w^{0*3} & w^{0*4} & w^{0*5} & w^{0*6} & w^{0*7} & w^{0*8} & w^{0*9} & w^{0*10} \\ w^{1*0} & w^{1*1} & w^{1*2} & w^{1*3} & w^{1*4} & w^{1*5} & w^{1*6} & w^{1*7} & w^{1*8} & w^{1*9} & w^{1*10} \\ w^{2*0} & w^{2*1} & w^{2*2} & w^{2*3} & w^{2*4} & w^{2*5} & w^{2*6} & w^{2*7} & w^{2*8} & w^{2*9} & w^{2*10} \\ w^{3*0} & w^{3*1} & w^{3*2} & w^{3*3} & w^{3*4} & w^{3*5} & w^{3*6} & w^{3*7} & w^{3*8} & w^{3*9} & w^{3*10} \\ w^{4*0} & w^{4*1} & w^{4*2} & w^{4*3} & w^{4*4} & w^{4*5} & w^{4*6} & w^{4*7} & w^{4*8} & w^{4*9} & w^{4*10} \\ w^{5*0} & w^{5*1} & w^{5*2} & w^{5*3} & w^{5*4} & w^{5*5} & w^{5*6} & w^{5*7} & w^{5*8} & w^{5*9} & w^{5*10} \\ w^{6*0} & w^{6*1} & w^{6*2} & w^{6*3} & w^{6*4} & w^{6*5} & w^{6*6} & w^{6*7} & w^{6*8} & w^{6*9} & w^{6*10} \\ w^{7*0} & w^{7*1} & w^{7*2} & w^{7*3} & w^{7*4} & w^{7*5} & w^{7*6} & w^{7*7} & w^{7*8} & w^{7*9} & w^{7*10} \\ w^{8*0} & w^{8*1} & w^{8*2} & w^{8*3} & w^{8*4} & w^{8*5} & w^{8*6} & w^{8*7} & w^{8*8} & w^{8*9} & w^{8*10} \\ w^{9*0} & w^{9*1} & w^{9*2} & w^{9*3} & w^{9*4} & w^{9*5} & w^{9*6} & w^{9*7} & w^{9*8} & w^{9*9} & w^{9*10} \\ w^{10*0} & w^{10*1} & w^{10*2} & w^{10*3} & w^{10*4} & w^{10*5} & w^{10*6} & w^{10*7} & w^{10*8} & w^{10*9} & w^{10*10} \end{bmatrix},$$

and $w = \exp(-j2\pi/11)$   (63)

Optionally, this embodiment of this application further provides another $P_{22\times22}$ matrix when the quantity of spatial streams is 21 or 22, for example, in the foregoing formula (61) to formula (63), $P_{11\times11}$ in the formula (62) may be obtained by multiplying any one column of $P_{original}$ in the formula (63) by -1. Alternatively, $P_{11\times11}$ in the formula (62) may be obtained by multiplying any plurality of columns of $P_{original}$ in the formula (63) by -1, where the any plurality of columns herein do not include all columns. In addition to that the second column, the sixth column, and the tenth column in the formula (62) are multiplied by -1, any other plurality of columns may be multiplied by -1. For example, the second column, the third column, and the fourth column of $P_{original}$ in the formula (63) are multiplied by -1.

(6) P matrix for 25 or 26 spatial streams

When the quantity of spatial streams is 25 or 26, the following P matrix provided in this embodiment of this application is:

$$P_{26\times26} = \begin{bmatrix} P_{13\times13} & P_{13\times13} \\ P_{13\times13} & -P_{13\times13} \end{bmatrix} \quad (71)$$

where

$$P_{13\times13} =$$

$$
\begin{bmatrix}
w^{0*0} & -w^{0*1} & w^{0*2} & w^{0*3} & w^{0*4} & -w^{0*5} & w^{0*6} & w^{0*7} & w^{0*8} & -w^{0*9} & w^{0*10} & w^{0*11} & w^{0*12} \\
w^{1*0} & -w^{1*1} & w^{1*2} & w^{1*3} & w^{1*4} & -w^{1*5} & w^{1*6} & w^{1*7} & w^{1*8} & -w^{1*9} & w^{1*10} & w^{1*11} & w^{1*12} \\
w^{2*0} & -w^{2*1} & w^{2*2} & w^{2*3} & w^{2*4} & -w^{2*5} & w^{2*6} & w^{2*7} & w^{2*8} & -w^{2*9} & w^{2*10} & w^{2*11} & w^{2*12} \\
w^{3*0} & -w^{3*1} & w^{3*2} & w^{3*3} & w^{3*4} & -w^{3*5} & w^{3*6} & w^{3*7} & w^{3*8} & -w^{3*9} & w^{3*10} & w^{3*11} & w^{3*12} \\
w^{4*0} & -w^{4*1} & w^{4*2} & w^{4*3} & w^{4*4} & -w^{4*5} & w^{4*6} & w^{4*7} & w^{4*8} & -w^{4*9} & w^{4*10} & w^{4*11} & w^{4*12} \\
w^{5*0} & -w^{5*1} & w^{5*2} & w^{5*3} & w^{5*4} & -w^{5*5} & w^{5*6} & w^{5*7} & w^{5*8} & -w^{5*9} & w^{5*10} & w^{5*11} & w^{5*12} \\
w^{6*0} & -w^{6*1} & w^{6*2} & w^{6*3} & w^{6*4} & -w^{6*5} & w^{6*6} & w^{6*7} & w^{6*8} & -w^{6*9} & w^{6*10} & w^{6*11} & w^{6*12} \\
w^{7*0} & -w^{7*1} & w^{7*2} & w^{7*3} & w^{7*4} & -w^{7*5} & w^{7*6} & w^{7*7} & w^{7*8} & -w^{7*9} & w^{7*10} & w^{7*11} & w^{7*12} \\
w^{8*0} & -w^{8*1} & w^{8*2} & w^{8*3} & w^{8*4} & -w^{8*5} & w^{8*6} & w^{8*7} & w^{8*8} & -w^{8*9} & w^{8*10} & w^{8*11} & w^{8*12} \\
w^{9*0} & -w^{9*1} & w^{9*2} & w^{9*3} & w^{9*4} & -w^{9*5} & w^{9*6} & w^{9*7} & w^{9*8} & -w^{9*9} & w^{9*10} & w^{9*11} & w^{9*12} \\
w^{10*0} & -w^{10*1} & w^{10*2} & w^{10*3} & w^{10*4} & -w^{10*5} & w^{10*6} & w^{10*7} & w^{10*8} & -w^{10*9} & w^{10*10} & w^{10*11} & w^{10*12} \\
w^{11*0} & -w^{11*1} & w^{11*2} & w^{11*3} & w^{11*4} & -w^{11*5} & w^{11*6} & w^{11*7} & w^{11*8} & -w^{11*9} & w^{11*10} & w^{11*11} & w^{11*12} \\
w^{12*0} & -w^{12*1} & w^{12*2} & w^{12*3} & w^{12*4} & -w^{12*5} & w^{12*6} & w^{12*7} & w^{12*8} & -w^{12*9} & w^{12*10} & w^{12*11} & w^{12*12}
\end{bmatrix},
$$

and $w = \exp(-j2\pi/13)$ (72)

$P_{13\times13}$ in the foregoing formula (72) is obtained by multiplying the second column, the sixth column, and the tenth column of $P_{original}$ in the following formula (73) by -1, where $P_{original}$ is expressed as follows:

$$
P_{original} =
\begin{bmatrix}
w^{0*0} & w^{0*1} & w^{0*2} & w^{0*3} & w^{0*4} & w^{0*5} & w^{0*6} & w^{0*7} & w^{0*8} & w^{0*9} & w^{0*10} & w^{0*11} & w^{0*12} \\
w^{1*0} & w^{1*1} & w^{1*2} & w^{1*3} & w^{1*4} & w^{1*5} & w^{1*6} & w^{1*7} & w^{1*8} & w^{1*9} & w^{1*10} & w^{1*11} & w^{1*12} \\
w^{2*0} & w^{2*1} & w^{2*2} & w^{2*3} & w^{2*4} & w^{2*5} & w^{2*6} & w^{2*7} & w^{2*8} & w^{2*9} & w^{2*10} & w^{2*11} & w^{2*12} \\
w^{3*0} & w^{3*1} & w^{3*2} & w^{3*3} & w^{3*4} & w^{3*5} & w^{3*6} & w^{3*7} & w^{3*8} & w^{3*9} & w^{3*10} & w^{3*11} & w^{3*12} \\
w^{4*0} & w^{4*1} & w^{4*2} & w^{4*3} & w^{4*4} & w^{4*5} & w^{4*6} & w^{4*7} & w^{4*8} & w^{4*9} & w^{4*10} & w^{4*11} & w^{4*12} \\
w^{5*0} & w^{5*1} & w^{5*2} & w^{5*3} & w^{5*4} & w^{5*5} & w^{5*6} & w^{5*7} & w^{5*8} & w^{5*9} & w^{5*10} & w^{5*11} & w^{5*12} \\
w^{6*0} & w^{6*1} & w^{6*2} & w^{6*3} & w^{6*4} & w^{6*5} & w^{6*6} & w^{6*7} & w^{6*8} & w^{6*9} & w^{6*10} & w^{6*11} & w^{6*12} \\
w^{7*0} & w^{7*1} & w^{7*2} & w^{7*3} & w^{7*4} & w^{7*5} & w^{7*6} & w^{7*7} & w^{7*8} & w^{7*9} & w^{7*10} & w^{7*11} & w^{7*12} \\
w^{8*0} & w^{8*1} & w^{8*2} & w^{8*3} & w^{8*4} & w^{8*5} & w^{8*6} & w^{8*7} & w^{8*8} & w^{8*9} & w^{8*10} & w^{8*11} & w^{8*12} \\
w^{9*0} & w^{9*1} & w^{9*2} & w^{9*3} & w^{9*4} & w^{9*5} & w^{9*6} & w^{9*7} & w^{9*8} & w^{9*9} & w^{9*10} & w^{9*11} & w^{9*12} \\
w^{10*0} & w^{10*1} & w^{10*2} & w^{10*3} & w^{10*4} & w^{10*5} & w^{10*6} & w^{10*7} & w^{10*8} & w^{10*9} & w^{10*10} & w^{10*11} & w^{10*12} \\
w^{11*0} & w^{11*1} & w^{11*2} & w^{11*3} & w^{11*4} & w^{11*5} & w^{11*6} & w^{11*7} & w^{11*8} & w^{11*9} & w^{11*10} & w^{11*11} & w^{11*12} \\
w^{12*0} & w^{12*1} & w^{12*2} & w^{12*3} & w^{12*4} & w^{12*5} & w^{12*6} & w^{12*7} & w^{12*8} & w^{12*9} & w^{12*10} & w^{12*11} & w^{12*12}
\end{bmatrix},
$$

and $w = \exp(-j2\pi/13)$ (73)

Optionally, this embodiment of this application further provides another $P_{26\times26}$ matrix when the quantity of spatial streams is 25 or 26, for example, in the foregoing formula (71) to formula (73), $P_{13\times13}$ in the formula (72) may be obtained by multiplying any one column of $P_{original}$ in the formula (73) by -1. Alternatively, $P_{13\times13}$ in the formula (72) may be obtained by multiplying any plurality of columns of $P_{original}$ in the formula (73) by -1, where the any plurality of columns herein do not include all columns. In addition to that the second column, the sixth column, and the tenth column in the formula (72) are multiplied by -1, any other plurality of columns may be multiplied by -1. For example, the second column, the third column, and the fourth column of $P_{original}$ in the formula (73) are multiplied by -1.

(7) P matrix for 29 or 30 spatial streams

When the quantity of spatial streams is 29 or 30, the following P matrix provided in this embodiment of this application is:

$$P_{30\times30} = \begin{bmatrix} P_{15\times15} & P_{15\times15} \\ P_{15\times15} & -P_{15\times15} \end{bmatrix} \qquad (81)$$

where

$$P_{15\times15} =$$

$$\begin{bmatrix}
w^{0*0} & -w^{0*1} & w^{0*2} & w^{0*3} & w^{0*4} & -w^{0*5} & w^{0*6} & w^{0*7} & w^{0*8} & -w^{0*9} & w^{0*10} & w^{0*11} & w^{0*12} & -w^{0*13} & -w^{0*14} \\
w^{1*0} & -w^{1*1} & w^{1*2} & w^{1*3} & w^{1*4} & -w^{1*5} & w^{1*6} & w^{1*7} & w^{1*8} & -w^{1*9} & w^{1*10} & w^{1*11} & w^{1*12} & -w^{1*13} & -w^{1*14} \\
w^{2*0} & -w^{2*1} & w^{2*2} & w^{2*3} & w^{2*4} & -w^{2*5} & w^{2*6} & w^{2*7} & w^{2*8} & -w^{2*9} & w^{2*10} & w^{2*11} & w^{2*12} & -w^{2*13} & -w^{2*14} \\
w^{3*0} & -w^{3*1} & w^{3*2} & w^{3*3} & w^{3*4} & -w^{3*5} & w^{3*6} & w^{3*7} & w^{3*8} & -w^{3*9} & w^{3*10} & w^{3*11} & w^{3*12} & -w^{3*13} & -w^{3*14} \\
w^{4*0} & -w^{4*1} & w^{4*2} & w^{4*3} & w^{4*4} & -w^{4*5} & w^{4*6} & w^{4*7} & w^{4*8} & -w^{4*9} & w^{4*10} & w^{4*11} & w^{4*12} & -w^{4*13} & -w^{4*14} \\
w^{5*0} & -w^{5*1} & w^{5*2} & w^{5*3} & w^{5*4} & -w^{5*5} & w^{5*6} & w^{5*7} & w^{5*8} & -w^{5*9} & w^{5*10} & w^{5*11} & w^{5*12} & -w^{5*13} & -w^{5*14} \\
w^{6*0} & -w^{6*1} & w^{6*2} & w^{6*3} & w^{6*4} & -w^{6*5} & w^{6*6} & w^{6*7} & w^{6*8} & -w^{6*9} & w^{6*10} & w^{6*11} & w^{6*12} & -w^{6*13} & -w^{6*14} \\
w^{7*0} & -w^{7*1} & w^{7*2} & w^{7*3} & w^{7*4} & -w^{7*5} & w^{7*6} & w^{7*7} & w^{7*8} & -w^{7*9} & w^{7*10} & w^{7*11} & w^{7*12} & -w^{7*13} & -w^{7*14} \\
w^{8*0} & -w^{8*1} & w^{8*2} & w^{8*3} & w^{8*4} & -w^{8*5} & w^{8*6} & w^{8*7} & w^{8*8} & -w^{8*9} & w^{8*10} & w^{8*11} & w^{8*12} & -w^{8*13} & -w^{8*14} \\
w^{9*0} & -w^{9*1} & w^{9*2} & w^{9*3} & w^{9*4} & -w^{9*5} & w^{9*6} & w^{9*7} & w^{9*8} & -w^{9*9} & w^{9*10} & w^{9*11} & w^{9*12} & -w^{9*13} & -w^{9*14} \\
w^{10*0} & -w^{10*1} & w^{10*2} & w^{10*3} & w^{10*4} & -w^{10*5} & w^{10*6} & w^{10*7} & w^{10*8} & -w^{10*9} & w^{10*10} & w^{10*11} & w^{10*12} & -w^{10*13} & -w^{10*14} \\
w^{11*0} & -w^{11*1} & w^{11*2} & w^{11*3} & w^{11*4} & -w^{11*5} & w^{11*6} & w^{11*7} & w^{11*8} & -w^{11*9} & w^{11*10} & w^{11*11} & w^{11*12} & -w^{11*13} & -w^{11*14} \\
w^{12*0} & -w^{12*1} & w^{12*2} & w^{12*3} & w^{12*4} & -w^{12*5} & w^{12*6} & w^{12*7} & w^{12*8} & -w^{12*9} & w^{12*10} & w^{12*11} & w^{12*12} & -w^{12*13} & -w^{12*14} \\
w^{13*0} & -w^{13*1} & w^{13*2} & w^{13*3} & w^{13*4} & -w^{13*5} & w^{13*6} & w^{13*7} & w^{13*8} & -w^{13*9} & w^{13*10} & w^{13*11} & w^{13*12} & -w^{13*13} & -w^{13*14} \\
w^{14*0} & -w^{14*1} & w^{14*2} & w^{14*3} & w^{14*4} & -w^{14*5} & w^{14*6} & w^{14*7} & w^{14*8} & -w^{14*9} & w^{14*10} & w^{14*11} & w^{14*12} & -w^{14*13} & -w^{14*14}
\end{bmatrix},$$

and $\quad w = \exp(-j2\pi/15) \qquad (82)$

$P_{15\times15}$ in the foregoing formula (82) is obtained by multiplying the second column, the sixth column, the tenth column, the fourteenth column, and the fifteenth column of $P_{original}$ in the following formula (83) by -1, where $P_{original}$ is expressed as follows:

$$P_{original} =$$

$$\begin{bmatrix}
w^{0*0} & w^{0*1} & w^{0*2} & w^{0*3} & w^{0*4} & w^{0*5} & w^{0*6} & w^{0*7} & w^{0*8} & w^{0*9} & w^{0*10} & w^{0*11} & w^{0*12} & w^{0*13} & w^{0*14} \\
w^{1*0} & w^{1*1} & w^{1*2} & w^{1*3} & w^{1*4} & w^{1*5} & w^{1*6} & w^{1*7} & w^{1*8} & w^{1*9} & w^{1*10} & w^{1*11} & w^{1*12} & w^{1*13} & w^{1*14} \\
w^{2*0} & w^{2*1} & w^{2*2} & w^{2*3} & w^{2*4} & w^{2*5} & w^{2*6} & w^{2*7} & w^{2*8} & w^{2*9} & w^{2*10} & w^{2*11} & w^{2*12} & w^{2*13} & w^{2*14} \\
w^{3*0} & w^{3*1} & w^{3*2} & w^{3*3} & w^{3*4} & w^{3*5} & w^{3*6} & w^{3*7} & w^{3*8} & w^{3*9} & w^{3*10} & w^{3*11} & w^{3*12} & w^{3*13} & w^{3*14} \\
w^{4*0} & w^{4*1} & w^{4*2} & w^{4*3} & w^{4*4} & w^{4*5} & w^{4*6} & w^{4*7} & w^{4*8} & w^{4*9} & w^{4*10} & w^{4*11} & w^{4*12} & w^{4*13} & w^{4*14} \\
w^{5*0} & w^{5*1} & w^{5*2} & w^{5*3} & w^{5*4} & w^{5*5} & w^{5*6} & w^{5*7} & w^{5*8} & w^{5*9} & w^{5*10} & w^{5*11} & w^{5*12} & w^{5*13} & w^{5*14} \\
w^{6*0} & w^{6*1} & w^{6*2} & w^{6*3} & w^{6*4} & w^{6*5} & w^{6*6} & w^{6*7} & w^{6*8} & w^{6*9} & w^{6*10} & w^{6*11} & w^{6*12} & w^{6*13} & w^{6*14} \\
w^{7*0} & w^{7*1} & w^{7*2} & w^{7*3} & w^{7*4} & w^{7*5} & w^{7*6} & w^{7*7} & w^{7*8} & w^{7*9} & w^{7*10} & w^{7*11} & w^{7*12} & w^{7*13} & w^{7*14} \\
w^{8*0} & w^{8*1} & w^{8*2} & w^{8*3} & w^{8*4} & w^{8*5} & w^{8*6} & w^{8*7} & w^{8*8} & w^{8*9} & w^{8*10} & w^{8*11} & w^{8*12} & w^{8*13} & w^{8*14} \\
w^{9*0} & w^{9*1} & w^{9*2} & w^{9*3} & w^{9*4} & w^{9*5} & w^{9*6} & w^{9*7} & w^{9*8} & w^{9*9} & w^{9*10} & w^{9*11} & w^{9*12} & w^{9*13} & w^{9*14} \\
w^{10*0} & w^{10*1} & w^{10*2} & w^{10*3} & w^{10*4} & w^{10*5} & w^{10*6} & w^{10*7} & w^{10*8} & w^{10*9} & w^{10*10} & w^{10*11} & w^{10*12} & w^{10*13} & w^{10*14} \\
w^{11*0} & w^{11*1} & w^{11*2} & w^{11*3} & w^{11*4} & w^{11*5} & w^{11*6} & w^{11*7} & w^{11*8} & w^{11*9} & w^{11*10} & w^{11*11} & w^{11*12} & w^{11*13} & w^{11*14} \\
w^{12*0} & w^{12*1} & w^{12*2} & w^{12*3} & w^{12*4} & w^{12*5} & w^{12*6} & w^{12*7} & w^{12*8} & w^{12*9} & w^{12*10} & w^{12*11} & w^{12*12} & w^{12*13} & w^{12*14} \\
w^{13*0} & w^{13*1} & w^{13*2} & w^{13*3} & w^{13*4} & w^{13*5} & w^{13*6} & w^{13*7} & w^{13*8} & w^{13*9} & w^{13*10} & w^{13*11} & w^{13*12} & w^{13*13} & w^{13*14} \\
w^{14*0} & w^{14*1} & w^{14*2} & w^{14*3} & w^{14*4} & w^{14*5} & w^{14*6} & w^{14*7} & w^{14*8} & w^{14*9} & w^{14*10} & w^{14*11} & w^{14*12} & w^{14*13} & w^{14*14}
\end{bmatrix},$$

$$\text{and} \quad w = \exp(-j2\pi/15) \qquad (83)$$

Optionally, this embodiment of this application further provides another $P_{30\times30}$ matrix when the quantity of spatial streams is 29 or 30, for example, in the foregoing formula (81) to formula (83), $P_{15\times15}$ in the formula (82) may be obtained by multiplying any one column of $P_{original}$ in the formula (83) by -1. Alternatively, $P_{15\times15}$ in the formula (82) may be obtained by multiplying any plurality of columns of $P_{original}$ in the formula (83) by -1, where the any plurality of columns herein do not include all columns. In addition to that the second column, the sixth column, and the tenth column in the formula (82) are multiplied by -1, any other plurality of columns may be multiplied by -1. For example, the second column, the third column, and the fourth column of $P_{original}$ in the formula (83) are multiplied by -1.

The sending device 100 further includes a cyclic shift module 105, a spatial mapping module 106, an inverse discrete Fourier transform module 107, a guard period module 108, and a radio frequency transmitting module 109. The matrix-mapped sequence obtained through mapping by using the foregoing P matrix is placed in a corresponding spatial stream for sending.

The receiving device 200 is configured to receive the matrix-mapped sequence sent by the sending device 100, and perform channel estimation based on the matrix-mapped sequence. As shown in FIG. 2, the receiving device 200 includes a radio frequency receiving module 201 and a channel estimation module 202. The radio frequency receiving module 201 is configured to receive the matrix-mapped sequence sent by the sending device 100, and the channel estimation module 202 is configured to perform channel estimation based on the matrix-mapped sequence.

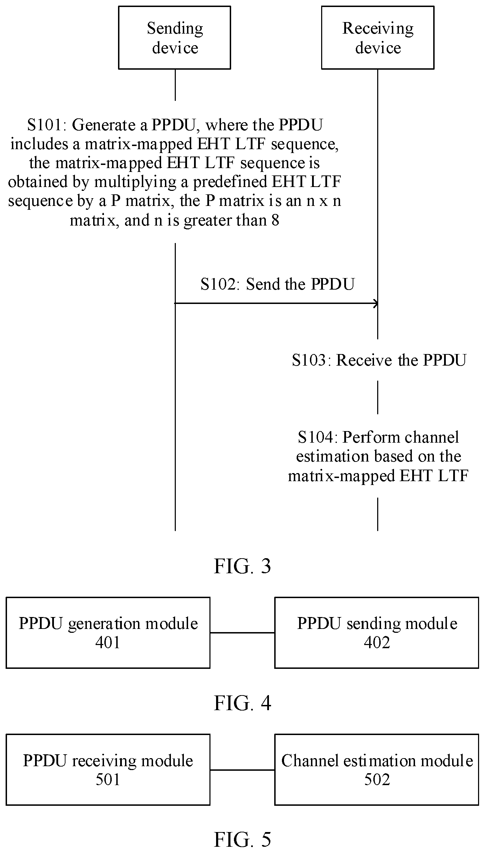

The following describes a sequence generation method in an embodiment of this application by using a procedure in FIG. 3 as an example.

As shown in FIG. 3, the sequence generation method includes the following steps.

S101: A sending device generates a PPDU, where the PPDU includes a matrix-mapped EHT LTF sequence, the matrix-mapped EHT LTF sequence is obtained by multiplying a predefined EHT LTF sequence by a P matrix, the P matrix is an n x n matrix, and n is greater than 8.

In step S101, the predefined EHT LTF sequence includes a plurality of different sequences in different modes and different bandwidths, the different bandwidths may include a 20 M bandwidth, a 40 M bandwidth, an 80 M bandwidth, a 160 M bandwidth, a 320 M bandwidth, a 160 M + 160 M bandwidth, and the like, and the different modes may include a 1× mode, a 2x mode, a 4x mode, and the like. For example, the plurality of different sequences in the different modes and the different bandwidths include a sequence in the 20 M bandwidth and the 1× mode, a sequence in the 20 M bandwidth and the 2x mode, a sequence in the 20 M bandwidth and the 4x mode, a sequence in the 40 M bandwidth and the 1× mode, a sequence in the 40 M bandwidth and the 2x mode, a sequence in the 40 M bandwidth and the 4x mode,..., a sequence in the 320 M bandwidth and the 1× mode, a sequence in the 320 M bandwidth and the 2x mode, and a sequence in the 320 M bandwidth and the 4x mode.

The EHT LTF sequence is multiplied by each row of the P matrix, to obtain a plurality of matrix-mapped EHT LTF sequences, where the plurality of matrix-mapped EHT LTF sequences are spatially mapped to a plurality of different spatial streams for sending.

The n x n P matrix (n is greater than 8) provided in this embodiment of this application is intended to ensure that when the quantity of spatial streams increases to more than 8, a matrix-mapped sequence sent in each spatial stream needs to remain orthogonal and has a low PAPR value.

In this embodiment of this application, when the quantity of spatial streams is n and n is an even number, the n x n P matrix is applied. When the quantity of spatial streams is n and n is an odd number, an (n+1) x (n+1) P matrix is applied.

For various P matrices for different quantities of spatial streams, refer to the foregoing descriptions. Details are not described herein again.

S102: The sending device sends the PPDU.

S103: A receiving device receives the PPDU, where the PPDU includes the matrix-mapped EHT LTF sequence. The matrix-mapped EHT LTF sequence is obtained by multiplying the predefined EHT LTF sequence by the P matrix, the P matrix is an n x n matrix, and n is greater than 8.

S104: The receiving device performs channel estimation based on the matrix-mapped EHT LTF sequence.

In this embodiment of this application, the matrix-mapped EHT LTF sequence in the PPDU has a low PAPR value.

The sequence generation method in the embodiments of this application is described above. The following describes a sequence generation apparatus in an embodiment of this application. It should be understood that the sequence generation apparatus is the sending device in the foregoing method, and has any function of the sending device in the foregoing method.

As shown in FIG. 4, the sequence generation apparatus includes:

> a PPDU generation module 401, configured to generate a PPDU, where the PPDU includes a matrix-mapped EHT LTF sequence, the matrix-mapped EHT LTF sequence is obtained by multiplying a predefined EHT LTF sequence by a P matrix, the P matrix is an n x n matrix, and n is greater than 8; and
> a PPDU sending module 402, configured to send the PPDU.

The sequence generation apparatus in this embodiment of this application has any function of the sending device in the foregoing method. Details are not described herein again.

The following briefly describes a sequence receiving apparatus in an embodiment of this application. It should be understood that the sequence receiving apparatus is the receiving device in the foregoing method, and has any function of the receiving device in the foregoing method.

As shown in FIG. 5, the sequence receiving apparatus includes:

> a PPDU receiving module 501, configured to receive a PPDU, where the PPDU includes a matrix-mapped EHT LTF sequence, the matrix-mapped EHT LTF sequence is obtained by multiplying a predefined EHT LTF sequence by a P matrix, the P matrix is an n x n matrix, and n is greater than 8; and
> a channel estimation module 502, configured to perform channel estimation based on the matrix-mapped EHT LTF sequence.

The sequence receiving apparatus in this embodiment of this application has any function of the receiving device in the foregoing method. Details are not described herein again.

It should be understood that the P matrix applied to the EHT LTF sequence in the embodiments of this application may include, in addition to the P matrices enumerated in the foregoing embodiments, the P matrices mentioned in the processes of the foregoing embodiments, for example, $P_{5\times5}$, $P_{3\times3}$, $P_{6\times6}$, $P_{7\times7}$, $P_{9\times9}$, $P_{11\times11}$, $P_{13\times13}$, and $P_{15\times15}$, that is, the P matrices in FIG. 2 may directly use the foregoing $P_{5\times5}$, $P_{3\times3}$, $P_{6\times6}$, $P_{7\times7}$, $P_{9\times9}$, $P_{11\times11}$, $P_{13\times13}$, and $P_{15\times15}$.

The sequence generation apparatus and the sequence receiving apparatus in the embodiments of this application are described above. The following describes possible product forms of the sequence generation apparatus and the sequence receiving apparatus. It should be understood that any product having functions of the sequence generation apparatus in FIG. 4 and any product having functions of the sequence receiving apparatus in FIG. 5 fall within the protection scope of the embodiments of this application. It should be further understood that the following description is merely an example, and product forms of the sequence generation apparatus and the sequence receiving apparatus in the embodiments of this application are not limited thereto.

In a possible product form, the sequence generation apparatus and the sequence receiving apparatus described in the embodiments of this application may be implemented by using a general bus architecture.

The sequence generation apparatus includes a processor and a transceiver that is internally connected to and communicates with the processor. The processor is configured to generate a PPDU, where the PPDU includes a matrix-mapped EHT LTF sequence, the matrix-mapped EHT LTF sequence is obtained by multiplying a predefined EHT LTF sequence by a P matrix, the P matrix is an n x n matrix, and n is greater than 8. The transceiver is configured to send the PPDU. Optionally, the sequence generation apparatus may further include a memory, where the memory is configured to store instructions executed by the processor.

The sequence receiving apparatus includes a processor and a transceiver that is internally connected to and communicates with the processor. The transceiver is configured to receive a PPDU, where the PPDU includes a matrix-mapped EHT LTF sequence, the matrix-mapped EHT LTF sequence is obtained by multiplying a predefined EHT LTF sequence by a P matrix, the P matrix is an n x n matrix, and n is greater than 8. The processor is configured to perform channel estimation based on the matrix-mapped EHT LTF sequence. Optionally, the sequence receiving apparatus may further include a memory, where the memory is configured to store instructions executed by the processor.

In a possible product form, the sequence generation apparatus and the sequence receiving apparatus described in the embodiments of this application may be implemented by using a general-purpose processor.

The general-purpose processor for implementing the sequence generation apparatus includes a processing circuit and an output interface that is internally connected to and communicates with the processing circuit. The processing circuit is configured to generate a PPDU, where the PPDU includes a matrix-mapped EHT LTF sequence, the matrix-mapped EHT LTF sequence is obtained by multiplying a predefined EHT LTF sequence by a P matrix, the P matrix is an n x n matrix, and n is greater than 8. The output interface is configured to send the PPDU. Optionally, the general-purpose processor may further include a storage medium, where the storage medium is configured to store instructions executed by the processing circuit.

The general-purpose processor for implementing the sequence receiving apparatus includes a processing circuit and an input interface that is internally connected to and communicates with the processing circuit. The input interface is configured to receive a PPDU, where the PPDU includes a matrix-mapped EHT LTF sequence, the matrix-mapped EHT LTF sequence is obtained by multiplying a predefined EHT LTF sequence by a P matrix, the P matrix is an n x n matrix, and n is greater than 8. The processing circuit is configured to perform channel estimation based on the matrix-mapped EHT LTF sequence. Optionally, the general-purpose processor may further include a storage medium, where the storage medium is configured to store instructions executed by the processing circuit.

In a possible product form, the sequence generation apparatus and the sequence receiving apparatus described in the embodiments of this application may alternatively be implemented by using the following: one or more FPGAs (Field Programmable Gate Arrays), PLDs (Programmable Logic Devices), controllers, state machines, gate logic, discrete hardware components, any other suitable circuits, or any combination of circuits capable of performing various functions described in this application.

It should be understood that the sequence generation apparatuses in the foregoing various product forms have any function of the sending device in the foregoing method embodiment, and details are not described herein again; and the sequence receiving apparatuses in the foregoing various product forms have any function of the receiving device in the foregoing method embodiment, and details are not described herein again.

It should be understood that the term "and/or" in this specification describes only an association relationship for describing associated objects and represents that three relationships may exist. For example, A and/or B may represent the following three cases: only A exists, both A and B exist, and only B exists. In addition, the character "/" in this specification usually indicates an "or" relationship between the associated objects.

A person of ordinary skill in the art may be aware that, in combination with the examples described in the embodiments disclosed in this specification, method steps and units may be implemented by electronic hardware, computer software, or a combination thereof. To clearly describe the interchangeability between hardware and software, the foregoing has generally described steps and compositions of each embodiment according to functions. Whether the functions are performed by hardware or software depends on particular applications and design constraint conditions of the technical solutions. The person of ordinary skill in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing described system, apparatus, and unit, refer to a corresponding process in the foregoing method embodiment, and details are not described herein again.

In the several embodiments provided in this application, it should be understood that the disclosed system, apparatus, and method may be implemented in other manners. For example, the described apparatus embodiment is merely an example. For example, division into units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one location, or may be distributed on a plurality of network units. A part or all of the units may be selected according to actual requirements to achieve the objectives of the solutions of the embodiments in this application.

In addition, functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software function unit and is sold or used as an independent product, the integrated unit may be stored in a computer-readable storage medium Based on such an understanding, the technical solutions in this application essentially, or the part contributing to the conventional technology, or all or a part of the technical solutions may be implemented in a form of a software product. The computer software product is stored in a storage medium and includes several instructions for instructing a computer device (which may be a personal computer, a server, a network device, or the like) to perform all or a part of the steps of the methods in the embodiments of this application. The foregoing storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific embodiments of this application, but are not intended to limit the protection scope of this application. Any modification or replacement readily figured out by a person skilled in the art within the technical scope disclosed in this application shall fall within the protection scope of this application. Therefore, the protection scope of this application shall be subject to the protection scope of the claims.

**Claims**

1. A sequence generation method, comprising:

   generating a PPDU, wherein the PPDU comprises a matrix-mapped EHT LTF sequence, the matrix-mapped EHT LTF sequence is obtained by multiplying a predefined EHT LTF sequence by a P matrix, the P matrix is an n x n matrix, and n is greater than 8; and
   sending the PPDU.

2. A sequence processing method, comprising:

   receiving a PPDU, wherein the PPDU comprises a matrix-mapped EHT LTF sequence, the matrix-mapped EHT LTF sequence is obtained by multiplying a predefined EHT LTF sequence by a P matrix, the P matrix is an n x n matrix, and n is greater than 8; and
   performing channel estimation based on the matrix-mapped EHT LTF sequence.

3. The method according to claim 1 or 2, wherein when n = 10, the P matrix is: $P_{10\times10} = \begin{bmatrix} P_{5\times5} & P_{5\times5} \\ P_{5\times5} & -P_{5\times5} \end{bmatrix}$, wherein

$$P_{5\times5} = \begin{bmatrix} w^{0*0} & -w^{0*1} & w^{0*2} & w^{0*3} & w^{0*4} \\ w^{1*0} & -w^{1*1} & w^{1*2} & w^{1*3} & w^{1*4} \\ w^{2*0} & -w^{2*1} & w^{2*2} & w^{2*3} & w^{2*4} \\ w^{3*0} & -w^{3*1} & w^{3*2} & w^{3*3} & w^{3*4} \\ w^{4*0} & -w^{4*1} & w^{4*2} & w^{4*3} & w^{4*4} \end{bmatrix}$$, and $w = \exp(-j2\pi/5)$.

4. The method according to claim 1 or 2, wherein when n = 12, the P matrix is: $P_{12\times12} = \begin{bmatrix} P_{6\times6} & P_{6\times6} \\ P_{6\times6} & -P_{6\times6} \end{bmatrix}$, wherein

$$P_{6\times6} = \begin{bmatrix} P_{3\times3} & P_{3\times3} \\ P_{3\times3} & -P_{3\times3} \end{bmatrix}, \quad P_{3\times3} = \begin{bmatrix} w^{0*0} & -w^{0*1} & w^{0*2} \\ w^{1*0} & -w^{1*1} & w^{1*2} \\ w^{2*0} & -w^{2*1} & w^{2*2} \end{bmatrix}$$, and $w = \exp(-j2\pi/3)$.

5. The method according to claim 1 or 2, wherein when n = 12, the P matrix is: $P_{12\times12} = \begin{bmatrix} P_{6\times6} & P_{6\times6} \\ P_{6\times6} & -P_{6\times6} \end{bmatrix}$, wherein

$$P_{6\times6} = \begin{bmatrix} w^{0*0} & -w^{0*1} & w^{0*2} & w^{0*3} & w^{0*4} & -w^{0*5} \\ w^{1*0} & -w^{1*1} & w^{1*2} & w^{1*3} & w^{1*4} & -w^{1*5} \\ w^{2*0} & -w^{2*1} & w^{2*2} & w^{2*3} & w^{2*4} & -w^{2*5} \\ w^{3*0} & -w^{3*1} & w^{3*2} & w^{3*3} & w^{3*4} & -w^{3*5} \\ w^{4*0} & -w^{4*1} & w^{4*2} & w^{4*3} & w^{4*4} & -w^{4*5} \\ w^{5*0} & -w^{5*1} & w^{5*2} & w^{5*3} & w^{5*4} & -w^{5*5} \end{bmatrix}, \text{ and } w = \exp(-j2\pi/6).$$

6. The method according to claim 1 or 2, wherein when n = 14, the P matrix is: $P_{14\times14} = \begin{bmatrix} P_{7\times7} & P_{7\times7} \\ P_{7\times7} & -P_{7\times7} \end{bmatrix}$, wherein

$$P_{7\times7} = \begin{bmatrix} w^{0*0} & -w^{0*1} & w^{0*2} & w^{0*3} & w^{0*4} & -w^{0*5} & w^{0*6} \\ w^{1*0} & -w^{1*1} & w^{1*2} & w^{1*3} & w^{1*4} & -w^{1*5} & w^{1*6} \\ w^{2*0} & -w^{2*1} & w^{2*2} & w^{2*3} & w^{2*4} & -w^{2*5} & w^{2*6} \\ w^{3*0} & -w^{3*1} & w^{3*2} & w^{3*3} & w^{3*4} & -w^{3*5} & w^{3*6} \\ w^{4*0} & -w^{4*1} & w^{4*2} & w^{4*3} & w^{4*4} & -w^{4*5} & w^{4*6} \\ w^{5*0} & -w^{5*1} & w^{5*2} & w^{5*3} & w^{5*4} & -w^{5*5} & w^{5*6} \\ w^{6*0} & -w^{6*1} & w^{6*2} & w^{6*3} & w^{6*4} & -w^{6*5} & w^{6*6} \end{bmatrix}, \text{ and } w = \exp(-j2\pi/7).$$

7. The method according to claim 1 or 2, wherein when n = 18, the P matrix is: $P_{18\times18} = \begin{bmatrix} P_{9\times9} & P_{9\times9} \\ P_{9\times9} & -P_{9\times9} \end{bmatrix}$, wherein

$$P_{9\times9} = \begin{bmatrix} w^{0*0} & -w^{0*1} & w^{0*2} & w^{0*3} & w^{0*4} & -w^{0*5} & w^{0*6} & w^{0*7} & w^{0*8} \\ w^{1*0} & -w^{1*1} & w^{1*2} & w^{1*3} & w^{1*4} & -w^{1*5} & w^{1*6} & w^{1*7} & w^{1*8} \\ w^{2*0} & -w^{2*1} & w^{2*2} & w^{2*3} & w^{2*4} & -w^{2*5} & w^{2*6} & w^{2*7} & w^{2*8} \\ w^{3*0} & -w^{3*1} & w^{3*2} & w^{3*3} & w^{3*4} & -w^{3*5} & w^{3*6} & w^{3*7} & w^{3*8} \\ w^{4*0} & -w^{4*1} & w^{4*2} & w^{4*3} & w^{4*4} & -w^{4*5} & w^{4*6} & w^{4*7} & w^{4*8} \\ w^{5*0} & -w^{5*1} & w^{5*2} & w^{5*3} & w^{5*4} & -w^{5*5} & w^{5*6} & w^{5*7} & w^{5*8} \\ w^{6*0} & -w^{6*1} & w^{6*2} & w^{6*3} & w^{6*4} & -w^{6*5} & w^{6*6} & w^{6*7} & w^{6*8} \\ w^{7*0} & -w^{7*1} & w^{7*2} & w^{7*3} & w^{7*4} & -w^{7*5} & w^{7*6} & w^{7*7} & w^{7*8} \\ w^{8*0} & -w^{8*1} & w^{8*2} & w^{8*3} & w^{8*4} & -w^{8*5} & w^{8*6} & w^{8*7} & w^{8*8} \end{bmatrix}, \text{ and } w = \exp(-j2\pi/9).$$

8. The method according to claim 1 or 2, wherein when n = 22, the P matrix is: $P_{22\times22} = \begin{bmatrix} P_{11\times11} & P_{11\times11} \\ P_{11\times11} & -P_{11\times11} \end{bmatrix}$, wherein

$$P_{11\times11} = \begin{bmatrix} w^{0*0} & -w^{0*1} & w^{0*2} & w^{0*3} & w^{0*4} & -w^{0*5} & w^{0*6} & w^{0*7} & w^{0*8} & -w^{0*9} & w^{0*10} \\ w^{1*0} & -w^{1*1} & w^{1*2} & w^{1*3} & w^{1*4} & -w^{1*5} & w^{1*6} & w^{1*7} & w^{1*8} & -w^{1*9} & w^{1*10} \\ w^{2*0} & -w^{2*1} & w^{2*2} & w^{2*3} & w^{2*4} & -w^{2*5} & w^{2*6} & w^{2*7} & w^{2*8} & -w^{2*9} & w^{2*10} \\ w^{3*0} & -w^{3*1} & w^{3*2} & w^{3*3} & w^{3*4} & -w^{3*5} & w^{3*6} & w^{3*7} & w^{3*8} & -w^{3*9} & w^{3*10} \\ w^{4*0} & -w^{4*1} & w^{4*2} & w^{4*3} & w^{4*4} & -w^{4*5} & w^{4*6} & w^{4*7} & w^{4*8} & -w^{4*9} & w^{4*10} \\ w^{5*0} & -w^{5*1} & w^{5*2} & w^{5*3} & w^{5*4} & -w^{5*5} & w^{5*6} & w^{5*7} & w^{5*8} & -w^{5*9} & w^{5*10} \\ w^{6*0} & -w^{6*1} & w^{6*2} & w^{6*3} & w^{6*4} & -w^{6*5} & w^{6*6} & w^{6*7} & w^{6*8} & -w^{6*9} & w^{6*10} \\ w^{7*0} & -w^{7*1} & w^{7*2} & w^{7*3} & w^{7*4} & -w^{7*5} & w^{7*6} & w^{7*7} & w^{7*8} & -w^{7*9} & w^{7*10} \\ w^{8*0} & -w^{8*1} & w^{8*2} & w^{8*3} & w^{8*4} & -w^{8*5} & w^{8*6} & w^{8*7} & w^{8*8} & -w^{8*9} & w^{8*10} \\ w^{9*0} & -w^{9*1} & w^{9*2} & w^{9*3} & w^{9*4} & -w^{9*5} & w^{9*6} & w^{9*7} & w^{9*8} & -w^{9*9} & w^{9*10} \\ w^{10*0} & -w^{10*1} & w^{10*2} & w^{10*3} & w^{10*4} & -w^{10*5} & w^{10*6} & w^{10*7} & w^{10*8} & -w^{10*9} & w^{10*10} \end{bmatrix},$$

and $w = \exp(-j2\pi/11)$.

**9.** The method according to claim 1 or 2, wherein when n = 26, the P matrix is: $P_{26\times26} = \begin{bmatrix} P_{13\times13} & P_{13\times13} \\ P_{13\times13} & -P_{13\times13} \end{bmatrix}$, wherein

$P_{13\times13} =$

$$\begin{bmatrix} w^{0*0} & -w^{0*1} & w^{0*2} & w^{0*3} & w^{0*4} & -w^{0*5} & w^{0*6} & w^{0*7} & w^{0*8} & -w^{0*9} & w^{0*10} & w^{0*11} & w^{0*12} \\ w^{1*0} & -w^{1*1} & w^{1*2} & w^{1*3} & w^{1*4} & -w^{1*5} & w^{1*6} & w^{1*7} & w^{1*8} & -w^{1*9} & w^{1*10} & w^{1*11} & w^{1*12} \\ w^{2*0} & -w^{2*1} & w^{2*2} & w^{2*3} & w^{2*4} & -w^{2*5} & w^{2*6} & w^{2*7} & w^{2*8} & -w^{2*9} & w^{2*10} & w^{2*11} & w^{2*12} \\ w^{3*0} & -w^{3*1} & w^{3*2} & w^{3*3} & w^{3*4} & -w^{3*5} & w^{3*6} & w^{3*7} & w^{3*8} & -w^{3*9} & w^{3*10} & w^{3*11} & w^{3*12} \\ w^{4*0} & -w^{4*1} & w^{4*2} & w^{4*3} & w^{4*4} & -w^{4*5} & w^{4*6} & w^{4*7} & w^{4*8} & -w^{4*9} & w^{4*10} & w^{4*11} & w^{4*12} \\ w^{5*0} & -w^{5*1} & w^{5*2} & w^{5*3} & w^{5*4} & -w^{5*5} & w^{5*6} & w^{5*7} & w^{5*8} & -w^{5*9} & w^{5*10} & w^{5*11} & w^{5*12} \\ w^{6*0} & -w^{6*1} & w^{6*2} & w^{6*3} & w^{6*4} & -w^{6*5} & w^{6*6} & w^{6*7} & w^{6*8} & -w^{6*9} & w^{6*10} & w^{6*11} & w^{6*12} \\ w^{7*0} & -w^{7*1} & w^{7*2} & w^{7*3} & w^{7*4} & -w^{7*5} & w^{7*6} & w^{7*7} & w^{7*8} & -w^{7*9} & w^{7*10} & w^{7*11} & w^{7*12} \\ w^{8*0} & -w^{8*1} & w^{8*2} & w^{8*3} & w^{8*4} & -w^{8*5} & w^{8*6} & w^{8*7} & w^{8*8} & -w^{8*9} & w^{8*10} & w^{8*11} & w^{8*12} \\ w^{9*0} & -w^{9*1} & w^{9*2} & w^{9*3} & w^{9*4} & -w^{9*5} & w^{9*6} & w^{9*7} & w^{9*8} & -w^{9*9} & w^{9*10} & w^{9*11} & w^{9*12} \\ w^{10*0} & -w^{10*1} & w^{10*2} & w^{10*3} & w^{10*4} & -w^{10*5} & w^{10*6} & w^{10*7} & w^{10*8} & -w^{10*9} & w^{10*10} & w^{10*11} & w^{10*12} \\ w^{11*0} & -w^{11*1} & w^{11*2} & w^{11*3} & w^{11*4} & -w^{11*5} & w^{11*6} & w^{11*7} & w^{11*8} & -w^{11*9} & w^{11*10} & w^{11*11} & w^{11*12} \\ w^{12*0} & -w^{12*1} & w^{12*2} & w^{12*3} & w^{12*4} & -w^{12*5} & w^{12*6} & w^{12*7} & w^{12*8} & -w^{12*9} & w^{12*10} & w^{12*11} & w^{12*12} \end{bmatrix},$$

and $w = \exp(-j2\pi/13)$.

**10.** The method according to claim 1 or 2, wherein when n = 30, the P matrix is: $P_{30\times30} = \begin{bmatrix} P_{15\times15} & P_{15\times15} \\ P_{15\times15} & -P_{15\times15} \end{bmatrix}$, wherein

$$P_{15\times15} =$$

$$
\begin{bmatrix}
w^{0*0} & -w^{0*1} & w^{0*2} & w^{0*3} & w^{0*4} & -w^{0*5} & w^{0*6} & w^{0*7} & w^{0*8} & -w^{0*9} & w^{0*10} & w^{0*11} & w^{0*12} & -w^{0*13} & -w^{0*14} \\
w^{1*0} & -w^{1*1} & w^{1*2} & w^{1*3} & w^{1*4} & -w^{1*5} & w^{1*6} & w^{1*7} & w^{1*8} & -w^{1*9} & w^{1*10} & w^{1*11} & w^{1*12} & -w^{1*13} & -w^{1*14} \\
w^{2*0} & -w^{2*1} & w^{2*2} & w^{2*3} & w^{2*4} & -w^{2*5} & w^{2*6} & w^{2*7} & w^{2*8} & -w^{2*9} & w^{2*10} & w^{2*11} & w^{2*12} & -w^{2*13} & -w^{2*14} \\
w^{3*0} & -w^{3*1} & w^{3*2} & w^{3*3} & w^{3*4} & -w^{3*5} & w^{3*6} & w^{3*7} & w^{3*8} & -w^{3*9} & w^{3*10} & w^{3*11} & w^{3*12} & -w^{3*13} & -w^{3*14} \\
w^{4*0} & -w^{4*1} & w^{4*2} & w^{4*3} & w^{4*4} & -w^{4*5} & w^{4*6} & w^{4*7} & w^{4*8} & -w^{4*9} & w^{4*10} & w^{4*11} & w^{4*12} & -w^{4*13} & -w^{4*14} \\
w^{5*0} & -w^{5*1} & w^{5*2} & w^{5*3} & w^{5*4} & -w^{5*5} & w^{5*6} & w^{5*7} & w^{5*8} & -w^{5*9} & w^{5*10} & w^{5*11} & w^{5*12} & -w^{5*13} & -w^{5*14} \\
w^{6*0} & -w^{6*1} & w^{6*2} & w^{6*3} & w^{6*4} & -w^{6*5} & w^{6*6} & w^{6*7} & w^{6*8} & -w^{6*9} & w^{6*10} & w^{6*11} & w^{6*12} & -w^{6*13} & -w^{6*14} \\
w^{7*0} & -w^{7*1} & w^{7*2} & w^{7*3} & w^{7*4} & -w^{7*5} & w^{7*6} & w^{7*7} & w^{7*8} & -w^{7*9} & w^{7*10} & w^{7*11} & w^{7*12} & -w^{7*13} & -w^{7*14} \\
w^{8*0} & -w^{8*1} & w^{8*2} & w^{8*3} & w^{8*4} & -w^{8*5} & w^{8*6} & w^{8*7} & w^{8*8} & -w^{8*9} & w^{8*10} & w^{8*11} & w^{8*12} & -w^{8*13} & -w^{8*14} \\
w^{9*0} & -w^{9*1} & w^{9*2} & w^{9*3} & w^{9*4} & -w^{9*5} & w^{9*6} & w^{9*7} & w^{9*8} & -w^{9*9} & w^{9*10} & w^{9*11} & w^{9*12} & -w^{9*13} & -w^{9*14} \\
w^{10*0} & -w^{10*1} & w^{10*2} & w^{10*3} & w^{10*4} & -w^{10*5} & w^{10*6} & w^{10*7} & w^{10*8} & -w^{10*9} & w^{10*10} & w^{10*11} & w^{10*12} & -w^{10*13} & -w^{10*14} \\
w^{11*0} & -w^{11*1} & w^{11*2} & w^{11*3} & w^{11*4} & -w^{11*5} & w^{11*6} & w^{11*7} & w^{11*8} & -w^{11*9} & w^{11*10} & w^{11*11} & w^{11*12} & -w^{11*13} & -w^{11*14} \\
w^{12*0} & -w^{12*1} & w^{12*2} & w^{12*3} & w^{12*4} & -w^{12*5} & w^{12*6} & w^{12*7} & w^{12*8} & -w^{12*9} & w^{12*10} & w^{12*11} & w^{12*12} & -w^{12*13} & -w^{12*14} \\
w^{13*0} & -w^{13*1} & w^{13*2} & w^{13*3} & w^{13*4} & -w^{13*5} & w^{13*6} & w^{13*7} & w^{13*8} & -w^{13*9} & w^{13*10} & w^{13*11} & w^{13*12} & -w^{13*13} & -w^{13*14} \\
w^{14*0} & -w^{14*1} & w^{14*2} & w^{14*3} & w^{14*4} & -w^{14*5} & w^{14*6} & w^{14*7} & w^{14*8} & -w^{14*9} & w^{14*10} & w^{14*11} & w^{14*12} & -w^{14*13} & -w^{14*14}
\end{bmatrix},
$$

and $w = \exp(-j2\pi/15)$.

**11.** A sequence generation apparatus, comprising modules configured to perform the method according to any one of claim 1 and claims 3 to 10.

**12.** A sequence processing apparatus, comprising modules configured to perform the method according to any one of claim 2 and claims 3 to 10.

**13.** A computer-readable storage medium, configured to store a computer program, wherein the computer program comprises instructions used to perform the method according to any one of claims 1 to 10.

**14.** A computer program, wherein the computer program comprises instructions used to perform the method according to any one of claims 1 to 10.

**15.** A general-purpose processor, comprising a processing circuit and an output interface that is internally connected to and communicates with the processing circuit, wherein the processing circuit is configured to perform the generation action in the method according to any one of claim 1 and claims 3 to 10, and the output interface is configured to perform the sending action in the method according to any one of claim 1 and claims 3 to 10.

**16.** A general-purpose processor, comprising a processing circuit and an input interface that is internally connected to and communicates with the processing circuit, wherein the input interface is configured to perform the receiving action in the method according to any one of claim 2 and claims 3 to 10, and the processing circuit is configured to perform the processing action in the method according to any one of claim 2 and claims 3 to 10.

Access point AP

Station STA 1

Station STA 0

FIG. 1

Sending device 100

FIG. 2

| Sending device | | Receiving device |
|---|---|---|

S101: Generate a PPDU, where the PPDU includes a matrix-mapped EHT LTF sequence, the matrix-mapped EHT LTF sequence is obtained by multiplying a predefined EHT LTF sequence by a P matrix, the P matrix is an n x n matrix, and n is greater than 8

S102: Send the PPDU

S103: Receive the PPDU

S104: Perform channel estimation based on the matrix-mapped EHT LTF

**FIG. 3**

| PPDU generation module 401 | PPDU sending module 402 |
|---|---|

**FIG. 4**

| PPDU receiving module 501 | Channel estimation module 502 |
|---|---|

**FIG. 5**

<div align="center">

**INTERNATIONAL SEARCH REPORT**

</div>

| International application No. |
|---|
| **PCT/CN2020/114611** |

| **A.** | **CLASSIFICATION OF SUBJECT MATTER** |
|---|---|

H04L 27/26(2006.01)i

According to International Patent Classification (IPC) or to both national classification and IPC

| **B.** | **FIELDS SEARCHED** |
|---|---|

Minimum documentation searched (classification system followed by classification symbols)

H04L;H04W

Documentation searched other than minimum documentation to the extent that such documents are included in the fields searched

Electronic data base consulted during the international search (name of data base and, where practicable, search terms used)

CNKI, CNPAT, WPI, EPODOC, 3GPP, IEEE: 序列, 矩阵, 映射, 物理层, 协议数据单元, 极高, 吞吐量, 吞吐率, 长训练序列, 乘, sequence, matrix, mapping, PHY, protocol data unit, PPDU, EHT, LTF, extremely high throughput, long, training, field, PAPR

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | WO 2019074927 A1 (QUALCOMM INCORPORATED) 18 April 2019 (2019-04-18) description, paragraph 0041 - paragraph 0064 | 1-16 |
| A | US 2019097850 A1 (KENNEY, Thomas et al.) 28 March 2019 (2019-03-28) entire document | 1-16 |
| A | CN 107210987 A (LG ELECTRONICS INC.) 26 September 2017 (2017-09-26) entire document | 1-16 |
| A | CN 109245806 A (HUAWEI TECHNOLOGIES CO., LTD.) 18 January 2019 (2019-01-18) entire document | 1-16 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **27 November 2020** | **08 December 2020** |

| Name and mailing address of the ISA/CN | Authorized officer |
|---|---|
| **China National Intellectual Property Administration (ISA/ CN)** **No. 6, Xitucheng Road, Jimenqiao Haidian District, Beijing 100088 China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/114611**

| Patent document cited in search report | | | Publication date (day/month/year) | Patent family member(s) | | | Publication date (day/month/year) |
|---|---|---|---|---|---|---|---|
| WO | 2019074927 | A1 | 18 April 2019 | EP | 3695552 | A1 | 19 August 2020 |
| | | | | AU | 2018348068 | A1 | 02 April 2020 |
| | | | | US | 2019115970 | A1 | 18 April 2019 |
| | | | | CN | 111344981 | A | 26 June 2020 |
| | | | | TW | 201924291 | A | 16 June 2019 |
| | | | | KR | 20200070248 | A | 17 June 2020 |
| US | 2019097850 | A1 | 28 March 2019 | None | | | |
| CN | 107210987 | A | 26 September 2017 | US | 2017373808 | A1 | 28 December 2017 |
| | | | | JP | 2018509816 | A | 05 April 2018 |
| | | | | WO | 2016125998 | A1 | 11 August 2016 |
| | | | | EP | 3255857 | A1 | 13 December 2017 |
| | | | | US | 2020044798 | A1 | 06 February 2020 |
| | | | | KR | 20170118102 | A | 24 October 2017 |
| CN | 109245806 | A | 18 January 2019 | CN | 104253673 | A | 31 December 2014 |
| | | | | US | 2016156497 | A1 | 02 June 2016 |
| | | | | CN | 109245809 | A | 18 January 2019 |
| | | | | CN | 109245807 | A | 18 January 2019 |
| | | | | US | 2019238388 | A1 | 01 August 2019 |
| | | | | US | 2019238387 | A1 | 01 August 2019 |
| | | | | US | 2019238386 | A1 | 01 August 2019 |
| | | | | WO | 2014206115 | A1 | 31 December 2014 |
| | | | | CN | 109245808 | A | 18 January 2019 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910869280